**Europäisches Patentamt**

**European Patent Office**

**Office européen des brevets**

(19)

(11) **EP 0 735 409 B1**

(12) **FASCICULE DE BREVET EUROPEEN**

(45) Date de publication et mention
de la délivrance du brevet:
**03.09.2003 Bulletin 2003/36**

(51) Int Cl.⁷: **G02F 1/37**

(21) Numéro de dépôt: **96400633.2**

(22) Date de dépôt: **26.03.1996**

(54) **Procédé de fabrication de structures en polymères organiques, transparentes, auto organisées pour la conversion de fréquence optique**

Verfahren zur Herstellung selbstorganisierter durchsichtiger Strukturen in organischen Polymermaterialien für die Umwandlung optischer Frequenzen

Method for the manufacturing of transparent self-organized structures made of organic polymers for the conversion of optical frequency

(84) Etats contractants désignés:
**DE GB IT**

(30) Priorité: **28.03.1995 FR 9503616**

(43) Date de publication de la demande:
**02.10.1996 Bulletin 1996/40**

(73) Titulaire: **COMMISSARIAT A L'ENERGIE ATOMIQUE**
**75015 Paris Cédex 15 (FR)**

(72) Inventeurs:
• **Charra, Fabrice**
**91460 Marcoussis (FR)**
• **Fiorini, Céline**
**91140 Villebon sur Yvette (FR)**
• **Lorin, André**
**91400 Orsay (FR)**
• **Nunzi, Jean-Michel**
**92160 Antony (FR)**
• **Raimond, Paul**
**94270 Le Kremlin Bicetre (FR)**

(74) Mandataire: **Audier, Philippe André et al Brevalex,**
**3, rue du Docteur Lancereaux**
**75008 Paris (FR)**

(56) Documents cités:
• **OPTICS LETTERS, vol. 18, no. 12, Juin 1993, WASHINGTON US, pages 941-943, XP002007236 F.CHARRA: "light-induced second harmonic..."**
• **OPTICS LETTERS, vol. 19, no. 14, Juillet 1994, WASHINGTON US, pages 1025-1027, XP002007237 R.COHEN: "creation of second order nonlinearity..."**
• **OPTICS LETTERS, vol. 12, no. 8, Août 1987, WASHINGTON US, pages 585-587, XP002007238 R.H.STOLEN: "self-organized phase-matched harmonic..."**

## Description

La présente invention a pour objet un procédé de fabrication de structures en polymères organiques transparents, destinés à la réalisation de dispositifs auto organisés pour la conversion de fréquence.

De tels dispositifs peuvent être utilisés, notamment pour la réalisation de micro-sources lasers bleues.

La mise au point de micro-sources lasers émettant dans le bleu suscite actuellement un vif intérêt et de nombreux travaux ont d'ores et déjà été entrepris. De telles sources peuvent être utilisées notamment dans le domaine de l'instrumentation médicale, des télécommunications et plus particulièrement pour le stockage optique d'informations. Dans ce dernier cas, l'existence d'une source laser émettant dans le bleu permettrait d'augmenter la densité d'informations stockées et lues par voie optique. En effet, la surface minimum occupée par l'unité d'information étant de l'ordre du carré de la longueur d'onde, diviser la longueur d'onde par deux permet de multiplier par quatre la densité d'informations stockées.

Cependant, on rencontre certains problèmes pour la réalisation de sources lasers émettant dans le bleu. En effet, les techniques suivantes peuvent être envisagées pour réaliser de telles sources :

- émission directe dans le bleu à l'aide de diodes lasers réalisées avec des semi-conducteurs à grande bande interdite, comme il est décrit par M.A. Haase, J. Qiu, J.M. DePuydt and H.Cheng, "Blue and green laser diodes" dans Applied Physics Letters, 59, (11), (1991), p 1272 ;
- phénomène d'amplification paramétrique en utilisant un faisceau de pompe infrarouge, comme il est décrit par T. Hebert, R. Wannemacher, W. Lenth, M. MacFarlane, "Blue and green cw Upconversion lasing in Er:YLiF$_4$", dans Applied Physics Letters, 57, (17), (1990), P 1727 ; et,
- doublage de fréquence des diodes lasers commercialement disponibles émettant dans le proche infrarouge.

L'emploi des deux premières techniques donne lieu à de nombreuses difficultés d'ordre technologique car le fonctionnement de telles sources n'a pu être mis en évidence jusqu'à présent qu'à de très basses températures (77 et 35 K). En revanche, la troisième technique qui fait appel au doublage de fréquence, paraît plus prometteuse car la technologie de diodes lasers émettant dans le rouge et le proche infrarouge est bien maîtrisée. Cependant, comme on peut le conclure de l'article de W.P. Risk, "Compact blue laser devices" dans Optics and Photonics news, (mai 1990) p 10, il est difficile d'obtenir par cette technique, une efficacité de conversion élevée.

Le phénomène de doublage de fréquence est un processus optique non linéaire qui fait appel à un faisceau laser à fréquence fondamentale ω suffisamment intense pour polariser un milieu matériel de façon anharmonique, ce qui conduit à l'apparition d'une fréquence double 2 ω.

La polarisation induite dans le milieu peut s'écrire sous la forme :

$$P_{2\omega} = \varepsilon_0 \chi^{(2)} E\omega^2,$$

où $\varepsilon_0$ représente la constante diélectrique du milieu, Eω représente l'amplitude du champ optique à fréquence fondamentale ω et $\chi^{(2)}$, la susceptibilité du second ordre, caractérise l'efficacité du transfert d'énergie entre l'onde fondamentale et l'onde harmonique.

Pour ce doublage de fréquence, il est donc nécessaire de disposer d'un matériau possédant un coefficient non linéaire du second ordre $\chi^{(2)}$, ce qui concerne à la fois les propriétés microscopiques et macroscopiques du matériau.

L'obtention des propriétés microscopiques suppose que les électrons les plus polarisables doivent tout d'abord être liés à un potentiel asymétrique (afin d'avoir une anharmonicité d'ordre 2 de leur mouvement), ce qui implique que pour doubler la fréquence, une molécule ne doit pas posséder de centre d'inversion.

L'obtention des propriétés macroscopiques implique que les molécules doivent être orientées dans un assemblage sans centre d'inversion afin que leurs différentes polarisations puissent rayonner de façon constructive.

L'orientation spontanée n'étant pas une tendance naturelle pour la plupart des molécules, la principale difficulté réside donc dans la réalisation de structures non-centro-symétriques.

On peut obtenir de telles structures à partir de cristaux organiques ou inorganiques, ou à partir de polymères orientés. Dans le cas de polymères, cette orientation peut être obtenue de façon classique par polarisation Corona, à chaud, à une température voisine de la température de transition vitreuse du polymère pour aligner les molécules actives sous un fort champ électrique statique.

Dans le cas des cristaux organiques ou inorganiques, on obtient de bons résultats pour le doublage de fortes intensités, mais de nombreux problèmes restent à résoudre dans le cas du doublage de faibles intensités (10 à 100 mW). De plus, le coût de fabrication de tels cristaux reste relativement élevé.

Dans le cas des polymères organiques, il est difficile d'obtenir des rendements satisfaisants pour la génération du second harmonique.

En effet, l'efficacité de génération du second harmonique dépend de la densité de puissance de pompe et de la longueur d'interaction dans le milieu. Du fait de la dispersion des indices de réfraction, un désaccord de phase apparaît au cours de la propagation entre l'onde non linéaire déjà générée et la polarisation non linéaire créée. Ce désaccord de phase limite donc la longueur sur laquelle la génération de second harmonique est efficace. De plus dans une configuration de guide d'onde, pour maintenir sur des distances importantes des densités de puissance élevées, il est nécessaire d'avoir un recouvrement des modes à fréquence fondamentale et second harmonique à l'intérieur du guide. Or l'obtention d'un accord de phase et d'un recouvrement des modes est difficile à satisfaire simultanément avec les polymères orientés par la technique Corona.

La présente invention a précisément pour objet un procédé de fabrication d'une structure en polymère organique transparente auto organisée pour la conversion de fréquences optiques, qui, grâce à l'emploi d'une technique de polarisation totalement optique, permet d'obtenir une structure satisfaisant les conditions simultanées d'accord de phase et de recouvrement des modes.

Selon l'invention, il est considéré un procédé de fabrication d'une structure en polymère organique transparente organisée pour la conversion de fréquence optique, selon lequel l'on soumet un matériau constitué d'un polymère organique transparent comprenant des molécules organiques optiquement actives et possédant une non linéarité optique microscopique du second ordre, à l'action simultanée d'un premier faisceau laser à fréquence fondamentale $\omega$ et d'un second faisceau laser de second harmonique $2\omega$, pendant une durée suffisante pour induire une non-linéarité macroscopique du second ordre dans la structure, ce procédé étant caractérisé par le fait que les molécules organiques sont transparentes aux deux faisceaux laser.

Selon l'invention, on utilise ainsi une nouvelle technique d'orientation des molécules actives basées uniquement sur des interactions optiques. Des interactions optiques de ce type, ont été utilisées antérieurement à la présente invention pour polariser des matériaux en structures non centro-symétriques dans le cas d'une fibre optique de silice, comme il est décrit par R. H. Stolen et H.W.K. Tom, "Self-organized phase-matched second harmonic generation in optical fibers" dans Optics Letters, 12, (8), (1987), p 585 et par T.J. Driscoll et N.M. Lawandy, "Optically encoded second harmonic generation in bulk silica based glasses" dans Journal of the Optical Society of America B., 11, (2), (1994), p 355.

Ce type d'interaction optique a aussi été utilisé pour induire une non linéarité du second ordre dans un matériau organique absorbant à la fréquence double 2 $\omega$, comme il est décrit par F. Charra et al dans Optics Letters, vol 18, n°72, 1993, p 941.

Dans ce dernier cas, l'obtention de la non linéarité du second ordre fait appel à des mécanismes d'excitation des molécules par absorption, ce qui provoque une sélection des molécules orientées soit verticalement soit horizontalement, suivie d'une photo isomérisation.

Dans la présente invention, on ne pouvait s'attendre à obtenir une orientation des molécules sous l'action simultanée de deux faisceaux lasers, puisque les molécules qui doivent être orientées, sont transparentes.

Néanmoins, on a pu orienter au moyen de faisceaux laser des molécules organiques, actives et transparentes incluses dans une matrice hôte en polymère transparent en faisant appel à des mécanismes totalement optiques.

Ces molécules organiques, actives et transparentes peuvent être des molécules du type "Push/Pull", c'est-à-dire possédant à la fois un groupe donneur d'électrons et un groupe accepteur d'électrons, séparés l'un de l'autre par un ou plusieurs groupements comportant des systèmes d'électrons $\pi$ conjugués, donc susceptibles de se déplacer sur plusieurs atomes.

De telles molécules peuvent répondre à la formule:

$$A \!-\! (B) \!-\! D$$

dans laquelle A est un groupe accepteur d'électrons, D est un groupe donneur d'électrons, et (B) est composé d'un ou plusieurs noyaux aromatiques comportant éventuellement un ou plusieurs hétéro-atomes.

Les groupes donneurs d'électrons D peuvent être, par exemple, du type alkyle comme $CH_3$, alkoxy comme $OCH_3$, amino ou amino substitué comme $N(CH_3)_2$.

Les groupes accepteurs d'électrons A peuvent être, par exemple, du type cyano ($C \equiv N$), formyle (CHO), acétyle ($COCH_3$) ou nitro ($NO_2$).

Les noyaux aromatiques (B) comportant éventuellement un ou plusieurs hétéroatomes tels que 0, S et N, peuvent être, par exemple, le benzène, le thiophène, la pyridine, le pyrazole, le furanne, le biphényle.

A titre d'exemples de telles molécules actives, on peut citer la paranitroaniline et ses dérivés.

Selon un premier mode de réalisation de l'invention, ces molécules actives sont fixées dans le polymère par des liaisons covalentes.

Dans ce cas le matériau soumis à l'action simultanée des deux faisceaux lasers est un copolymère d'un premier monomère polymérisable et d'un second monomère polymérisable lié de façon covalente à la molécule organique active.

De tels copolymères peuvent être obtenus par exemple à partir d'un premier monomère, de type acrylate ou méthacrylate et d'un second monomère également de type acrylate ou méthacrylate, lié de façon covalente à la molécule organique active.

A titre d'exemple d'un tel copolymère, on peut citer le copolymère de méthacrylate de méthyle (MMA) et de N-éthyl-N(méthacryloxyéthyl)-paranitroaniline (MMA-PNA).

De tels copolymères peuvent être préparés de façon classique par les techniques de polymérisation radicalaire au moyen de d'un initiateur de polymérisation radicalaire tel que $\alpha,\alpha$-azoisobutyronitrile, peroxyde de benzoyle, peroxyde de terbutyle.

Selon un second mode de réalisation de l'invention, les molécules organiques actives sont dispersées dans un polymère organique transparent sans être liées de façon covalente à ce polymère. Dans ce cas le polymère organique joue le rôle de matrice et les molécules organiques actives sont dissoutes dans cette matrice hôte.

De tels matériaux peuvent être préparés par dissolution du polymére et des molécules dans un solvant, suivie de l'évaporation de ce solvant.

Dans les deux modes de réalisation de l'invention, la teneur en molécules organiques actives du matériau polymère de départ est choisie de façon à obtenir un fort coefficient non linéaire du second ordre $\chi^{(2)}$ (en évitant de trop fortes concentrations qui pourraient entraîner la recristallisation des molécules à l'intérieur de la matrice polymère.

Généralement, le polymère ou copolymère de départ contient de 1 à 50 % en poids de molécules organiques actives.

Selon l'invention, le matériau soumis à l'action simultanée des deux faisceaux lasers peut être sous différentes formes. Généralement, il est sous la forme de guide d'onde, de barreau massif ou de fibre. Dans le cas d'un guide d'onde, celui-ci peut être obtenu en déposant sur un substrat de verre, par exemple par centrifugation, une couche mince d'une solution du polymère ou copolymère comprenant les molécules organiques actives. Dans le cas d'une fibre, celle-ci peut être obtenue à partir d'un barreau massif par étirage. Dans tous les cas, le matériau soumis à l'action des deux faisceaux laser est isotrope et ne posséde donc aucune propriété non linéaire du second ordre.

Pour obtenir cette non-linéarité, on envoie simultanément sur le matériau à la fois un faisceau laser intense, éventuellement en mode impulsionnel, à fréquence fondamentale $\omega$ et un faisceau de second harmonique 2 $\omega$, plus faible (appelé faisceau "seed"), résultant du doublage de fréquence du faisceau fondamental.

Les polarisations de ces deux faisceaux peuvent être variables, mais on préfère généralement une configuration dans laquelle les polarisations de ces deux faisceaux sont linéaires et parallèles.

Généralement on opère à la température ambiante, mais on peut également soumettre le matériau à l'action des deux faisceaux à une température supérieure ou inférieure à la température ambiante, mais toujours inférieure à la température de transition vitreuse du polymère.

La durée pendant laquelle on soumet le matériau à l'action simultanée des deux faisceaux lasers dépend de la nature du matériau, de sa forme, de la puissance de ces faisceaux d'écriture et de la fréquence de résonance des tirs laser.

Généralement des durées de quelques minutes à quelques heures sont suffisantes pour obtenir les propriétés voulues.

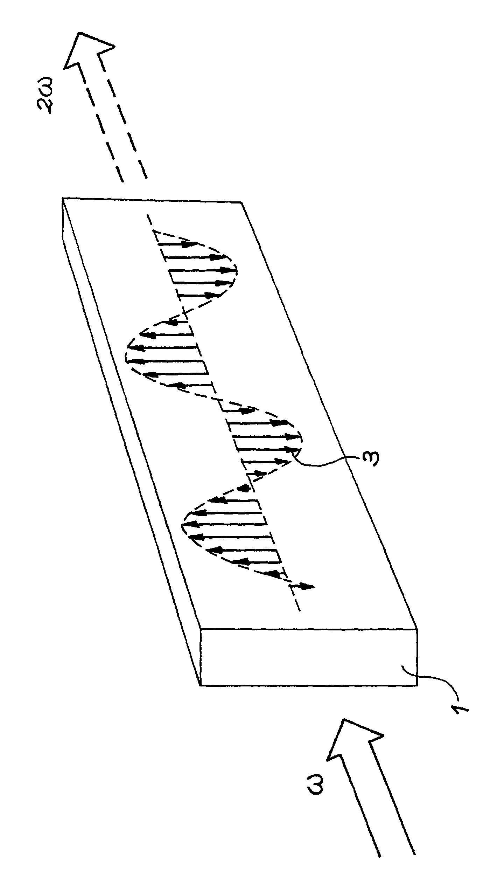

D'autres caractéristiques et avantages de l'invention apparaîtront mieux à la lecture de la description qui suit d'un exemple de réalisation donné bien entendu à titre illustratif et non limitatif, en référence à la figure unique annéxée.

Cette figure représente de façon schématique un barreau de polymère orienté par le procédé de l'invention.

L'exemple qui suit illustre la fabrication d'un barreau de copolymère de méthacrylate de méthyle (MMA) et de méthacrylate de N-éthyl-N(méthacryloxyéthyl)-paranitroaniline (MMA-PNA).

Pour préparer le copolymère on utilise 40 mg du second monomère MMA-PNA et 2 g du premier monomère MMA, et on utilise la technique de polymérisation en masse par voie radicalaire.

On obtient ainsi un copolymère comprenant 2 % de molécules actives.

On forme à partir du copolymère obtenu un barreau cylindrique d'une longueur de 8mm, d'un diamètre de 1 cm environ, par moulage suivi d'un polissage des faces avant et arrière.

On soumet ensuite ce barreau à l'action simultanée d'un premier faisceau laser constitué par un laser $Nd^{3+}$:YAG pulsé délivrant des impulsions de 25 picosecondes à un taux de répétition de 10 Hz, et d'un second faisceau laser ou faisceau "seed" de second harmonique, obtenu à partir du même laser par doublage de fréquence du faisceau fondamental à travers un cristal de diphosphate de potassium KDP.

La configuration utilisée correspond au cas où les deux faisceaux lasers sont polarisés parallèlement. Après polarisation, l'énergie par impulsion est de 0,5 mJ pour le premier faisceau laser et 2,5 $\mu$J pour le second faisceau à 2 $\omega$, le diamètre de chacun des faisceaux laser étant de l'ordre du millimètre.

Après 15 heures d'irradiation, le barreau présente une orientation périodique des molécules organiques, non linéaires, actives de paranitroaniline (PNA). Cette structure est représentée sur la figure annéxée où l'on voit que dans le barreau 1, les molécules sont orientées périodiquement selon les flèches 3.

Avec une telle structure lorsqu'on soumet le barreau à l'action d'un faisceau laser de fréquence $\omega$, on peut observer directement à l'oeil nu, après focalisation, le signal de second harmonique 2 $\omega$ généré par le barreau.

Dans le cas d'un réglage optimal des intensités relative des faisceaux d'écriture, le rendement maximal de génération de second harmonique correspond à une valeur du coefficient non linéaire du second ordre $\chi^{(2)}$ voisin de $1,5.10^{-15}$m/V et aucune décroissance notable du signal n'est observée après arrêt du processus de polarisation sur des durées de plusieurs dizaines d'heures.

Bien que la valeur du coefficient $\chi^{(2)}$cité ci-dessus corresponde encore à des rendements de conversion relativement faibles, le matériau préparé conformément à l'invention permet néanmoins un doublage de fréquence significatif de puissances relativement faibles, de l'ordre notamment de quelques centaines de mW.

Le procédé de l'invention est donc très avantageux. Par ailleurs, l'utilisation de polymères pour la conversion de fréquence permet d'envisager l'étirage de tels matériaux et leur mise en oeuvre sous forme de fibres optiques. Ainsi à titre d'illustration, une fibre optique de ce type d'une longueur de 60 centimètres dont le coeur de diamètre 5 $\mu$m, serait constitué à 50 % en masse de molécules organiques non linéaires devrait permettre d'avoir des rendements de l'ordre de 1 % pour une puissance d'entrée à fréquence fondamentale de 150 mW, ce qui correspond aux puissances typiques délivrées par les diodes lasers en GaAl/GaAlAs actuelles.

Enfin, l'utilisation conformément à l'invention d'un polymère organique est intéressante pour sa facilité de mise en oeuvre technologique, son coût de fabrication modeste, son seuil de dommage élevé et sa facilité d'intégration dans les circuits optiques. L'emploi de tels polymères comprenant des molécules organiques non linéaires permet, en raison du choix des molécules utilisées, l'obtention de fortes non linéarités microscopiques avec une synthèse chimique aisée. Les structures orientées obtenues par le procédé de l'invention présentent de plus les avantages suivants :

La technique de polarisation associée est facile à mettre en oeuvre comparée aux techniques standard de polarisation à chaud sous un fort champ électrique statique ($10^6$ volts par centimètre). De plus, elle permet la conception et la réalisation de circuits optiques par déplacement du point de focalisation des deux faisceaux lasers le long du matériau.

Les matériaux obtenus par ce procédé se trouvent automatiquement accordés en phase et permettent donc un doublage de fréquence efficace sur des longueurs d'interaction théoriquement infinies.

De tels matériaux à structure organisée peuvent être utilisés plus généralement pour la conversion de fréquence (mélange d'ondes, modulation électro-optique).

**Revendications**

1. Procédé de fabrication d'une structure en polymère organique, transparente, organisée pour la conversion de fréquence optique selon lequel l'on soumet un matériau constitué de polymère organique transparent comprenant des molécules organiques, optiquement actives et possédant une non-linéarité optique microscopique du second ordre, à l'action simultanée d'un premier faisceau laser à fréquence fondamentale $\omega$ et d'un second faisceau laser de second harmonique 2 $\omega$, pendant une durée suffisante pour induire une non linéarité du second ordre macroscopique dans la structure, ledit procédé étant **caractérisé en ce que** les molécules organiques sont transparentes aux deux faisceaux laser.

2. Procédé selon la revendication 1, **caractérisé en ce que** le matériau soumis à l'action simultanée des deux faisceaux lasers est un copolymère d'un premier monomère polymérisable et d'un second monomère polymérisable lié de façon covalente à la molécule organique active.

3. Procédé selon la revendication 1, **caractérisé en ce que** le matériau soumis à l'action simultanée des deux faisceaux lasers est un polymère organique transparent dans lequel sont dissoutes les molécules organiques actives.

4. Procédé selon l'une quelconque des revendications 1 à 3, **caractérisé en ce que** les molécules organiques actives répondent à la formule :

$$A\!-\!(B)\!-\!D$$

dans laquelle A est un groupe accepteur d'électrons, D est un groupe donneur d'électrons, et (B) est composé d'un ou plusieurs noyaux aromatiques comportant éventuellement un ou plusieurs hétéroatomes.

5. Procédé selon la revendication 2, **caractérisé en ce que** le matériau est un copolymère de méthacrylate de méthyle et de N-éthyl-N(méthacryloxyéthyl)-paranitroaniline.

6. Procédé selon l'une quelconque des revendications 1 à 5, **caractérisé en ce que** le polymère organique transparent comprend 1 à 50 % en poids de molécules organiques actives.

7. Procédé selon l'une quelconque des revendications 1 à 6, **caractérisé en ce que** les polarisations des deux faisceaux lasers sont linéaires et parallèles.

8. Procédé selon l'une quelconque des revendications 1 à 7, **caractérisé en ce que** le premier faisceau laser est un laser pulsé et **en ce que** le second faisceau laser est obtenu par doublage de fréquence du faisceau fondamental du premier faisceau laser.

9. Utilisation de la structure organisée en polymère organique transparent obtenue par le procédé selon l'une quelconque des revendications 1 à 8, pour la conversion de fréquence optique.

**10.** Utilisation selon la revendication 9, **caractérisée en ce que** la conversion de fréquence est un doublement de fréquence.

**11.** Utilisation selon l'une quelconque des revendications 9 et 10 **caractérisée en ce que** la structure est sous la forme de guide d'onde sur substrat de verre, de barreau massif ou de fibre optique.

**Patentansprüche**

**1.** Verfahren zur Herstellung einer transparenten Struktur aus einem organischen Polymer, die organisiert ist für die Umwandlung einer optischen Frequenz, bei dem man ein Material, bestehend aus einem transparenten organischen Polymer, das optisch aktive organische Moleküle umfasst und eine licht-mikroskopische Nicht-Linearität der zweiten Ordnung aufweist, gleichzeitig der Einwirkung eines ersten Laserstrahls mit einer Grundfrequenz $\omega$ und der Einwirkung eines zweiten Laserstrahls mit der zweiten Harmonischen $2\omega$ für eine Zeitspanne unterwirft, die ausreicht, um in der Struktur eine makroskopische Nicht-Linearität der zweiten Ordnung zu induzieren, wobei das Verfahren **dadurch gekennzeichnet ist, dass** die organischen Moleküle für die beiden Laserstrahlen transparent sind.

**2.** Verfahren nach Anspruch 1, **dadurch gekennzeichnet, dass** das Material, das gleichzeitig der Einwirkung von zwei Laserstrahlen ausgesetzt wird, ein Copolymer eines polymerisierbaren ersten Monomers und eines polymerisierbaren zweiten Monomers ist, das mit dem aktiven organischen Molekül kovalent verbunden ist.

**3.** Verfahren nach Anspruch 1, **dadurch gekennzeichnet, dass** das der gleichzeitigen Einwirkung von zwei Laserstrahlen ausgesetzte Material ein transparentes organisches Polymer ist, in dem die aktiven organischen Moleküle gelöst sind.

**4.** Verfahren nach einem der Ansprüche 1 bis 3, **dadurch gekennzeichnet, dass** die aktiven organischen Moleküle der Formel entsprechen:

$$A - (B) - D$$

in der A eine Elektronenakzeptorgruppe darstellt, D eine Elektronendonorgruppe darstellt und (B) aus einem oder mehreren aromatischen Kernen besteht, der (die) gegebenenfalls ein oder mehrere Heteroatome aufweist (aufweisen).

**5.** Verfahren nach Anspruch 2, **dadurch gekennzeichnet, dass** es sich bei dem Material um ein Copolymer von Methylmethacrylat und N-Ethyl-N-(methacryloxyethyl)-p-nitroanilin handelt.

**6.** Verfahren nach einem der Ansprüche 1 bis 5, **dadurch gekennzeichnet, dass** das transparente organische Polymer 1 bis 50 Gew.-% aktive organische Moleküle umfasst.

**7.** Verfahren nach einem der Ansprüche 1 bis 6, **dadurch gekennzeichnet, dass** die Polarisationen der beiden Laserstrahlen linear und parallel sind.

**8.** Verfahren nach einem der Ansprüche 1 bis 7, **dadurch gekennzeichnet, dass** der erste Laserstrahl ein Impuls-Laser ist und dass der zweite Laserstrahl erhalten wird durch Verdopplung der Frequenz des Grundstrahls des ersten Laserstrahls.

**9.** Verwendung der transparenten Struktur in Form eines organischen Polymers, die nach dem Verfahren nach einem der Ansprüche 1 bis 8 erhalten worden ist, zur Umwandlung einer optischen Frequenz.

**10.** Verwendung nach Anspruch 9, **dadurch gekennzeichnet, dass** die Frequenz-Umwandlung eine Verdoppelung der Frequenz darstellt.

**11.** Verwendung nach einem der Ansprüche 9 und 10, **dadurch gekennzeichnet, dass** die Struktur in Form eines Wellenleiters auf einem Glassubstrat, eines massiven Stabes oder einer optischen Faser vorliegt.

**Claims**

**1.** Process for the production of a transparent, organic polymer structure organized for optical frequency conversion, according to which a material constituted by a transparent, organic polymer incorporating optically active, organic molecules and having a second order, microscopic, optical nonlinearity is subject to the simultaneous action of a first laser beam at fundamental frequency $\omega$ and a second laser beam of second harmonic $2\omega$ for a time adequate to induce a second order, macroscopic nonlinearity in the structure, said process being **characterized in that** the organic molecules are transparent to the two laser beams.

**2.** Process according to claim 1, **characterized in that** the material subject to the simultaneous action of the two laser beams is a copolymer of a first polymerizable monomer and a second polarizable monomer covalently linked to the active, organic molecule.

**3.** Process according to claim 1, **characterized in**

**that** the material subject to the simultaneous action of the two laser beams is a transparent, organic polymer, in which are dissolved the active, organic molecules.

4. Process according to any one of the claims 1 to 3, **characterized in that** the active, organic molecules comply with the formula:

A (B) D

in which A is an electron acceptor group, D an electron donor group and (B) is formed by one or more aromatic nuclei optionally having one or more heteroatoms.

5. Process according to claim 2, **characterized in that** the material is a copolymer of methyl methacrylate and N-ethyl-N(methacryloxyethyl)paranitroaniline.

6. Process according to any one of the claims 1 to 5, **characterized in that** the transparent, organic polymer comprises 1 to 50 wt.% active, organic molecules.

7. Process according to any one of the claims 1 to 6, **characterized in that** the polarizations of the two laser beams are linear and parallel.

8. Process according to any one of the claims 1 to 7, **characterized in that** the first laser beam is a pulsed laser and that the second laser beam is obtained by frequency doubling of the fundamental beam of the first laser beam.

9. Use of the transparent, organic polymer, organized structure obtained by the process according to any one of the claims 1 to 8 for optical frequency conversion.

10. Use according to claim 9, **characterized in that** the frequency conversion is a frequency doubling.

11. Use according to either of the claims 9 and 10, **characterized in that** the structure is in the form of a waveguide on a glass substrate, solid bar or optical fibre.